# EUROPEAN PATENT APPLICATION

(11) **EP 4 615 080 A1**
(43) Date of publication of application: **10.09.2025**
(21) Application number: 23885423.6
(22) Date of filing: 02.10.2023
(51) Int. Cl.: H04W 64/00, H04W 4/44, H04W 24/10

(54) **BASE STATION DEVICE, TERMINAL DEVICE, AND METHOD**

(30) Priority: 04.11.2022 JP 2022177218
(71) Applicant: DENSO CORPORATION, Kariya-city, Aichi 448-8661 (JP)
(72) Inventor: YAMAMOTO, Tomoyuki, Kariya-city Aichi 448-8661 (JP)
(74) Representative: TBK
(86) International application number: PCT/JP2023/035953
(87) International publication number: WO 2024/095660

(57) **Abstract**

A terminal apparatus (10) includes a controller (110) and a communicator (120). The controller (110) is configured to generate path information that is used by a base station apparatus (20) and related to a path of the terminal apparatus, and generate error information for the path information. The communicator (120) is configured to transmit the error information to the base station apparatus (20).

## Description

### Cross-Reference To Related Application

The present application is based on and claims the benefit of priority to Japanese Patent Application No. 2022-177218 filed on November 4, 2022, the contents of which are incorporated herein by reference in its entirety.

### BACKGROUND

### Technical Field

The present disclosure relates to a base station apparatus, a terminal apparatus, and a method.

### Background

In recent years, technological developments related to an unmanned aerial vehicle (UAV) have progressed. Operation of the UAV is automatically controlled by radio communication with an air traffic control system or the like. Mobile communication via a base station apparatus is used for the radio communication between the UAV and the air traffic control system, and specifications for the mobile communication are expected to be studied more and more in the future. The same applies not only to the UAV but also to vehicles, such as an autonomous vehicle and an autonomous ship.

NPL 1 describes, in Fourth Generation Evolved Universal Terrestrial Radio Access (4G E-UTRA) that is a radio specification defined by Third Generation Partnership Project (3GPP (registered trademark)), a specification for transmission and reception of information between a terminal apparatus mounted in a UAV and a base station apparatus.

The 4G E-UTRA specification defines a case that the terminal apparatus mounted in the UAV transmits path information to the base station apparatus. Transmission of the path information to the base station apparatus is assumed to be useful for, for example, controlling handover and directivity of a beam.

The path information includes a list of waypoints indicating predetermined points on a path, an estimated time of arrival in a case where the UAV is estimated to arrive at each waypoint, and the like. The list of waypoints includes location coordinates of one or more waypoints on a planned flight path. Transmitting, for example, the path information to the base station apparatus at a certain periodicity during movement of the UAV enables the base station apparatus to recognize movement of the terminal apparatus according to the movement of the UAV.

[NPL 1] 3GPP TS 36.331 V17.1.0 (2022-06)

### SUMMARY

Due to factor(s) such as weather, a surrounding environment, and/or performance of the UAV itself, there is a case where an actual time of arrival in a case where the UAV actually arrives at any waypoint is different from an estimated time of arrival. This case is represented as a temporal error between an estimated time of arrival at the waypoint and the actual time of arrival. There is also a case where the UAV moves at a certain distance away from a planned flight path. This case is represented as a spatial error between the planned flight path and an actual flight path. In other words, the path information reported to the base station apparatus by the terminal apparatus includes a temporal error and a spatial error for a movement path of the

### UAV.

In view of the case that transmission of the path information to the base station apparatus is useful for controlling handover, and the like, it is preferable that an error in the path information be small, in other words, that accuracy of the path information be high. Detailed studies by the inventors of the present invention have found problems that existing 3GPP specifications do not include definitions related to degree of error for path information, allowed degree of error in path information, required degree of accuracy for path information, and the like.

The present disclosure provides a technique for exchange of error information for path information between a terminal apparatus and a base station apparatus.

According to a first aspect of the present disclosure, a terminal apparatus of the present disclosure includes: a controller configured to generate path information that is used by a base station apparatus and related to a path of the terminal apparatus, and generate error information for the path information; and a communicator configured to transmit the error information to the base station apparatus.

According to a second aspect of the present disclosure, a base station apparatus of the present disclosure includes: a communicator configured to receive error information for path information, the path information being information related to a path of a terminal apparatus; and a controller configured to use the error information.

According to the configuration described above, the base station apparatus can recognize degree of error for path information received from the terminal apparatus.

### BRIEF DESCRIPTION OF THE DRAWINGS

The above and other objects, features, and advantages of the present disclosure will become more apparent in the following detailed description with reference to the accompanying drawings, in which:
Fig. 1 is a diagram illustrating a communication system S;
Fig. 2 is a diagram illustrating a protocol stack of a U-plane;
Fig. 3 is a diagram illustrating a protocol stack of a C-plane;
Fig. 4 is a block diagram illustrating a schematic hardware configuration of a terminal apparatus 10;
Fig. 5 is a block diagram illustrating a schematic functional configuration of the terminal apparatus 10;
Fig. 6 is a block diagram illustrating a schematic hardware configuration of a base station apparatus 20;
Fig. 7 is a block diagram illustrating a schematic functional configuration of the base station apparatus 20;
Fig. 8 is a diagram illustrating processing for transmitting path information;
Fig. 9 is a diagram illustrating processing for transmitting path information and error information according to a first embodiment;
Fig. 10 is a diagram illustrating an example of generation and transmission of path information and error information according to the first embodiment;
Fig. 11 is a diagram illustrating another example of the generation and transmission of the path information and error information according to the first embodiment;
Fig. 12 is a diagram illustrating still another example of the generation and transmission of the path information and error information according to the first embodiment; and
Fig. 13 is a diagram illustrating processing for transmitting reference information and transmitting path information and error information according to a second embodiment.

### DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed unless the configurations are consistent with each other.

The present embodiment will describe an example in which a terminal apparatus is mounted in a UAV, and the terminal apparatus and a base station apparatus exchange, for information related to a movement path of the terminal apparatus according to movement of the UAV, error information and/or accuracy information for the information. The terminal apparatus and the base station apparatus are collectively referred to as a communication apparatus. Note that the present embodiment may be applied not only to UAVs but also to any other vehicles, such as manned and unmanned vehicles and autonomous vehicles / semi-autonomous vehicles, and manned and unmanned ships and autonomous ships / semi-autonomous ships. In other words, the present embodiment can be applied to any vehicle including the vehicles.

### 1. Common Embodiment

### 1.1. Communication System

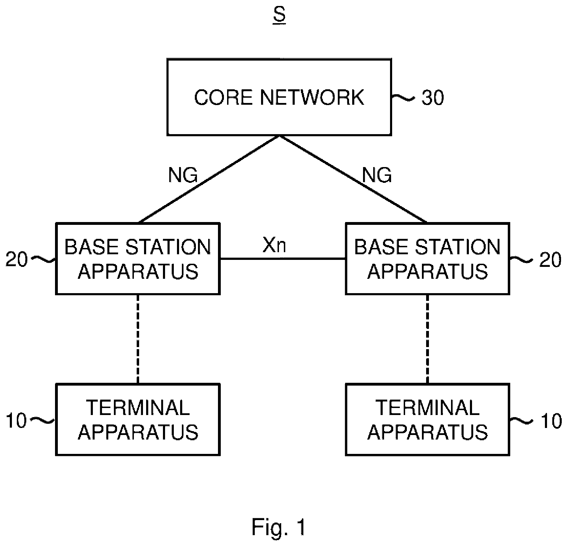

As illustrated in Fig. 1, a communication system S of an embodiment includes one or more terminal apparatuses 10, one or more base station apparatuses 20, and a core network 30. The communication system S is configured in accordance with certain technical specifications (TS). For example, the communication system S may be compliant with technical specifications defined by 3GPP (for example, 5G, 5G advanced, 6G, or the like).

In the communication system S, a user plane for transmitting and receiving user data and a control plane for transmitting and receiving control data are individually configured. In other words, the communication system S supports C/U separation. The user plane and the control plane are abbreviated as a U-plane and a C-plane, respectively.

The terminal apparatus 10 may be a device that performs radio communication with the base station apparatus 20, such as a user equipment (UE) that is a communication apparatus and that operates, for example, in accordance with 5G New Radio (NR) specifications of 3GPP. The terminal apparatus 10 may be an apparatus that is compliant with other older or newer 3GPP specifications.

The terminal apparatus 10 may be, for example, a communication module mounted on a UAV. The terminal apparatus 10 is preferably an apparatus adapted to one or a plurality of enhanced mobile broadbands (eMBBs), ultra-reliable and low-latency communications (URLLCs), and massive machine type communications (mMTCs).

The base station apparatus 20 performs radio communication with the terminal apparatus 10 in the U-plane and the C-plane. In other words, the base station apparatus 20 terminates a U-plane protocol and a C-plane protocol for the terminal apparatus 10.

The base station apparatus 20 performs communication with the core network 30 in the U-plane and the C-plane. More specifically, the core network 30 includes a plurality of logical nodes including an access and mobility management function (AMF) and a user plane function (UPF). The base station apparatus 20 connects to the AMF and the UPF in the C-plane and the U-plane, respectively.

The base station apparatus 20 may be, for example, a gNB that provides, for the terminal apparatus 10, a U-plane and a C-plane compliant with 5G NR specifications of 3GPP and that connects to 5G Core Network (5GC) of 3GPP. The base station apparatus 20 may be an eNB that connects to an evolved packet core (EPC) of 3GPP. Furthermore, the base station apparatus 20 may be an apparatus that is compliant with other older or newer 3GPP specifications.

The base station apparatus 20 may include a plurality of unit apparatuses. For example, the base station apparatus 20 may include a central unit (CU), a distributed unit (DU), and a radio unit (RU).

A plurality of the base station apparatuses 20 are interconnected, thereby forming a radio access network (RAN). A radio access network formed by the base station apparatus 20 being the gNB may be referred to as an NG-RAN. The base station apparatus 20 being the gNB may be referred to as an NG-RAN node.

The plurality of base station apparatuses 20 are interconnected by a certain interface (for example, Xn interface). More specifically, the plurality of base station apparatuses 20 are interconnected by an Xn-U interface and an Xn-C interface in the U-plane and the C-plane, respectively, for example. Note that the plurality of base station apparatuses 20 may be interconnected by another interface having different function and name.

Each base station apparatus 20 is connected to the core network 30 by a certain interface (for example, NG interface). More specifically, each base station apparatus 20 is connected to the UPF of the core network 30 by an NG-U interface in the U-plane, and is connected to the AMF of the core network 30 by an NG-C interface in the C-plane, for example. Note that each base station apparatus 20 may be connected to the core network 30 by another interface having different function and name.

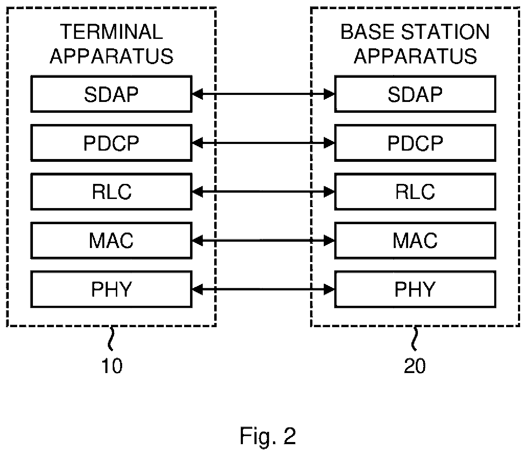

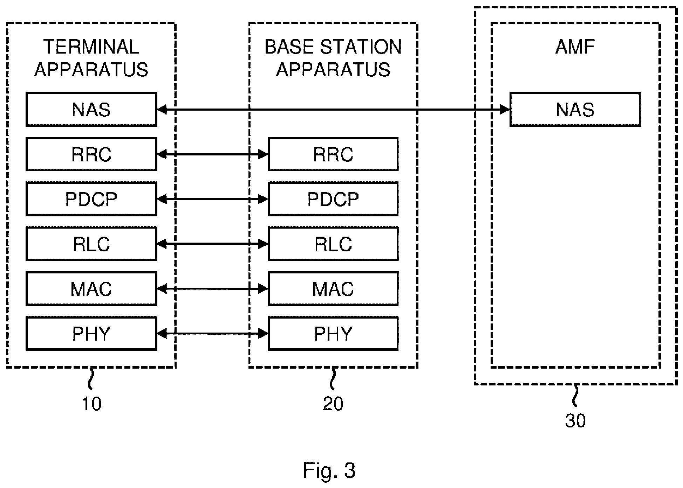

Radio protocol architecture between the terminal apparatus 10 and the base station apparatus 20 will be described with reference to Fig. 2. Radio protocol architecture between the terminal apparatus 10 and the base station apparatus 20 and radio protocol architecture between the terminal apparatus 10 and the core network 30 will be described with reference to Fig. 3.

As illustrated in Fig. 2, a protocol stack of the U-plane is provided with a physical (PHY) layer, a media access control (MAC) layer, a radio link control (RLC) layer, a packet data convergence protocol (PDCP) layer, and a service data adaptation protocol (SDAP) layer, in order from the lowest layer to the highest layer. Each of the layers described above is terminated by the base station apparatus 20 for a network side.

As illustrated in FIG. 3, a protocol stack of the C-plane is provided with a physical (PHY) layer, a media access control (MAC) layer, a radio link control (RLC) layer, a packet data convergence protocol (PDCP) layer, a radio resource control (RRC) layer, and a non-access stratum (NAS), in order from the lowest layer to the highest layer. Each of the layers described above other than the non-access stratum is terminated by the base station apparatus 20 for a network side. The non-access stratum is terminated by the AMF of the core network 30 for the network side.

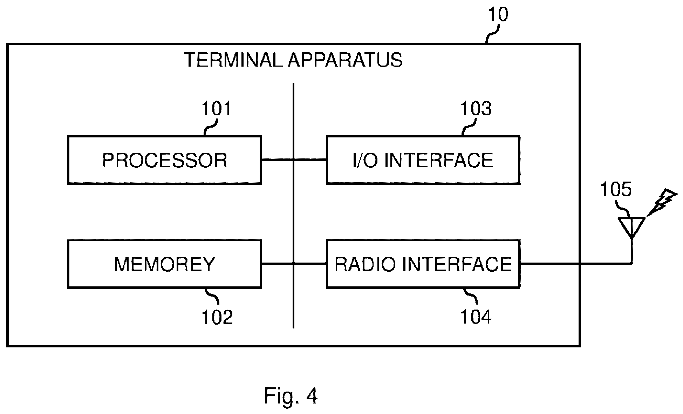

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102, into the memory 102 and/or a system memory (not illustrated) and executes the program, to thereby implement the functions of the terminal apparatus 10.

The input/output interface 103 is an interface that receives an operation to the terminal apparatus 10 and supplies the operation to the processor 101, and presents various pieces of information to a user, and is, for example, a touch panel.

The radio interface 104 is a circuit that executes various types of signal processing for implementing radio communication and includes a baseband processor and an RF circuit. The radio interface 104 transmits and receives a radio signal to and from the base station apparatus 20 via the antenna 105.

The terminal apparatus 10 may include a sensor for detecting an altitude, speed, and the like of the terminal apparatus 10 according to movement of the UAV, or may be connected to such a sensor. The sensor includes, for example, an atmospheric pressure sensor and an acceleration sensor. Furthermore, the terminal apparatus 10 may include a receiving apparatus that receives a Global Navigation Satellite System (GNSS) signal for detecting a location, speed, altitude, and the like of the terminal apparatus 10 and that receives planned path information from an air traffic control system. The planned path information includes geographic information on a path, a point, and a certain range in which the terminal apparatus 10 is planned to move / pass through.

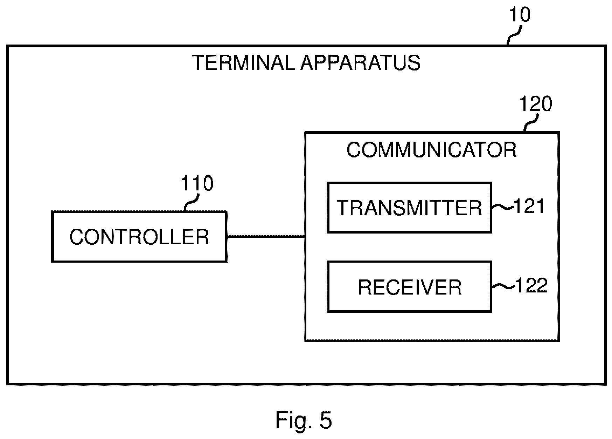

As illustrated in Fig. 5, the terminal apparatus 10 includes, as functional blocks, a controller 110 and a communicator 120. The communicator 120 includes a transmitter 121 and a receiver 122.

The controller 110 includes the processor 101 and the memory 102. In other words, the controller 110 is implemented by the processor 101 and the memory 102. The controller 110 executes various types of control processing in the terminal apparatus 10. For example, the controller 110 controls radio communication with the base station apparatus 20 via the communicator 120.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20.

In a case where the controller 110 operates, the various types of processing of the terminal apparatus 10 of the present embodiment are executed.

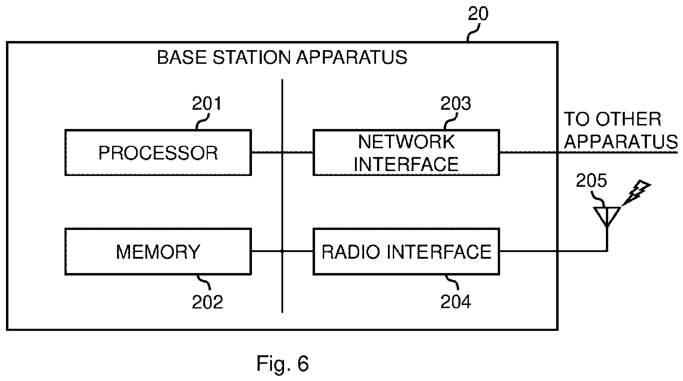

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202, into the memory 202 and/or a system memory (not illustrated) and executes the program, to thereby implement the functions of the base station apparatus 20.

The network interface 203 is an interface used to transmit and receive signals to and from another base station apparatus 20 and the core network 30.

The radio interface 204 is a circuit that executes various types of signal processing for implementing radio communication and includes a baseband processor and an RF circuit. The radio interface 204 transmits and receives a radio signal to and from the base station apparatus 20 via the antenna 205.

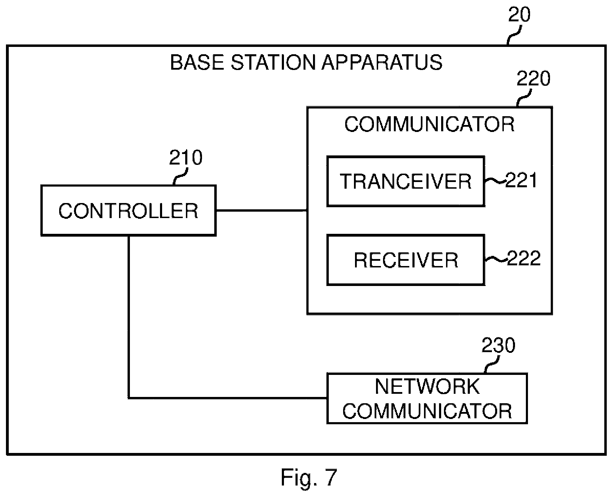

As illustrated in Fig. 7, the base station apparatus 20 includes, as functional blocks, a controller 210, a communicator 220, and a network communicator 230. The communicator 220 includes a transmitter 221 and a receiver 222.

The controller 210 includes the processor 201 and the memory 202. In other words, the controller 210 is implemented by the processor 201 and the memory 202. The controller 210 executes various types of control processing in the base station apparatus 20. For example, the controller 210 controls radio communication with the terminal apparatus 10 via the communicator 220. For example, the controller 210 controls communication with another node (for example, another base station apparatus 20 or a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10.

The network communicator 230 includes the network interface 203. In other words, the network communicator 230 is implemented by the network interface 203. The network interface 203 transmits and receives a signal to and from a network (or another node described above).

In a case where the controller 210 operates, the various types of processing of the base station apparatus 20 of the present embodiment are executed.

### 1.2. Channel and Control Data

The terminal apparatus 10 and the base station apparatus 20 transmit and receive user data and control data to and from each other. An example of transmission and reception of the control data on downlink and uplink will be described below.

The terminal apparatus 10 and the base station apparatus 20 transmit and receive user data and control data by using a plurality of layered channels. A physical channel is a channel used for physical communication between the terminal apparatus 10 and the base station apparatus 20. Examples of the physical channel include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink shared channel (DL-SCH) and an uplink shared channel (UL-SCH). For example, data on downlink may also be referred to as data of the DL-SCH. For example, data on uplink data may also be referred to as data of the UL-SCH. Here, the data of the DL-SCH includes user data on downlink. The data of the UL-SCH includes user data on uplink.

A logical channel is a channel located higher than the transport channel, and is mapped to the transport channel in a MAC layer. A plurality of logical channels may be mapped to one transport channel, and one logical channel may be mapped to a plurality of transport channels. The logical channel is classified according to characteristics of information to be transmitted. Examples of the logical channel include a broadcast control channel (BCCH), a common control channel (CCCH), and a dedicated control channel (DCCH).

The base station apparatus 20 transmits, to the terminal apparatus 10, control data in an RRC layer by using a signaling radio bearer (SRB) established between the terminal apparatus 10 and the base station apparatus 20 in the RRC layer. Hereinafter, a message exchanged between the base station apparatus 20 and the terminal apparatus 10 in the RRC layer may be referred to as an RRC message. A plurality of types of SRBs (for example, SRB0, SRB1, SRB2, SRB3, SRB4) are present. The SRB is used to transmit and receive a NAS message including control data in a NAS layer, in addition to the RRC message. A CCCH or a DCCH is used to transmit the RRC message from the base station apparatus 20 to the terminal apparatus 10. Each of the CCCH and the DCCH is mapped to a PDSCH via a DL-SCH. The RRC message corresponds to Layer 3 signaling.

As an example of the downlink RRC message, an RRC reconfiguration (RRCReconfiguration) message will be described. The RRC reconfiguration message is an RRC message transmitted from the base station apparatus 20 to the terminal apparatus 10 by using SRB1 or SRB3. The DCCH is used to transmit the RRC reconfiguration message. The RRC reconfiguration message is used to perform reconfiguration or modification related to connection between the base station apparatus 20 and the terminal apparatus 10.

The terminal apparatus 10 transmits an RRC message to the base station apparatus 20 by using the SRB described above. A CCCH or a DCCH is used to transmit the RRC message from the terminal apparatus 10 to the base station apparatus 20. Each of the CCCH and the DCCH is mapped to a PUSCH via a UL-SCH. The RRC message corresponds to Layer 3 signaling.

As an example of the downlink RRC message, a user equipment information request (UEInformationRequest) message will be described. The user equipment information request message is an RRC message transmitted from the base station apparatus 20 to the terminal apparatus 10 by using SRB1. The DCCH is used to transmit the user equipment information request message. The user equipment information request message is used by the base station apparatus 20 to extract information from the terminal apparatus 10.

As an example of the uplink RRC message, a user equipment information response (UEInformationResponse) message will be described. The user equipment information response message is an RRC message transmitted from the terminal apparatus 10 to the base station apparatus 20 by using SRB1 or SRB2. The DCCH is used to transmit the user equipment information response message. The user equipment information response message is used to forward, to the base station apparatus 20, information related to the terminal apparatus 10.

### 1.3. Transmission of Path Information

In the present embodiment, the terminal apparatus 10 transmits path information to the base station apparatus 20. The path information includes information related to a moving path of the terminal apparatus 10, such as location coordinates of a waypoint through which the terminal apparatus 10 has passed / is estimated to pass according to movement of a vehicle including the UAV and the like, and a time when the terminal apparatus 10 has arrived at / is estimated to arrive at the waypoint. The path information may include location information of the terminal apparatus 10, such as an altitude and/or a location at which the terminal apparatus 10 is located according to the movement of the vehicle. The path information is generated by the terminal apparatus 10, based on planned path information, location information, and the like acquired from the GPS, an air traffic control system, and/or a sensor, or the like.

Transmission, by the terminal apparatus 10, of the path information to the base station apparatus 20 is assumed to be useful for, for example, controlling handover and directivity of a beam. 4G E-UTRA specifications define that the terminal apparatus 10 transmits, to the base station apparatus 20, location coordinates of a waypoint as flight path information.

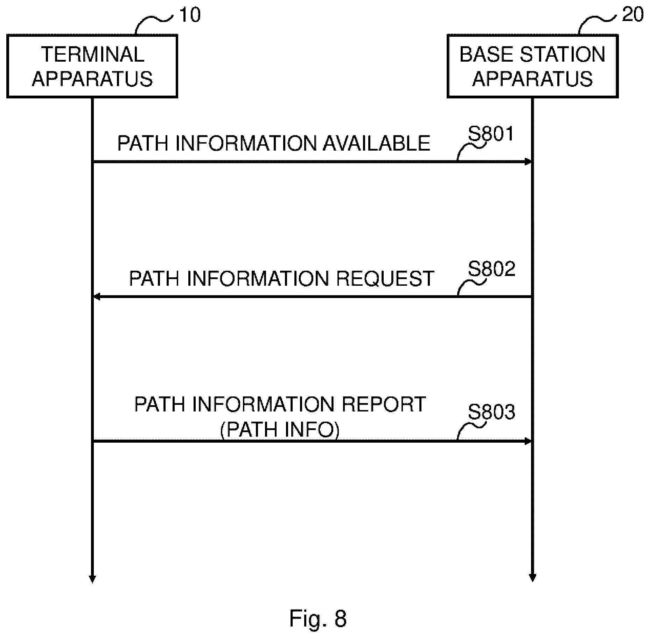

Processing in which the terminal apparatus 10 transmits the path information to the base station apparatus 20 will be described with reference to Fig. 8. A message to be described with reference to Fig. 8 is transmitted by an RRC message. The RRC message is exchanged between the terminal apparatus 10 and the base station apparatus 20 in the RRC layer illustrated in Fig. 3, in other words, the C-plane.

First, the controller 110 of the terminal apparatus 10 generates path information available (PathInfoAvailable) information, and the transmitter 121 of the communicator 120 transmits the path information available information to the base station apparatus 20 (step S801). The path information available information is an information element indicating that the terminal apparatus 10 has available path information, such as a case that the terminal apparatus 10 has arrived at a certain waypoint. For example, the path information available information is generated in response to determining that the terminal apparatus 10 has arrived at / is planned to arrive at a certain waypoint at a predetermined time, based on information received from the GPS. The path information available information includes flight path information available (flightPathInfoAvailable) information defined for path information of the terminal apparatus 10 according to movement of the UAV.

The path information available information may be transmitted in a case where an RRC connection is configured between the terminal apparatus 10 and the base station apparatus 20. In a case where the RRC connection is configured, the transmitter 121 transmits, to the base station apparatus 20, an RRC connection setup complete (RRCConnectionSetupComplete) message in response to a request message from the base station apparatus 20. The path information available information may be included in the RRC connection setup complete message, or another RRC message defined in a standard such as 5G.

The path information available information may be transmitted in a case where an RRC connection is reestablished between the terminal apparatus 10 and the base station apparatus 20. In a case where the RRC connection is reestablished, the transmitter 121 transmits, to the base station apparatus 20, an RRC connection reestablishment complete (RRCConnectionReestablishmentComplete) message in response to a request message from the base station apparatus 20. The path information available information may be included in the RRC connection reestablishment complete message, or another RRC message defined in a standard such as 5G.

The path information available information may be transmitted in a case where an RRC connection is resumed between the terminal apparatus 10 and the base station apparatus 20. In a case where the RRC connection is resumed, the transmitter 121 transmits, to the base station apparatus 20, an RRC connection resume complete (RRCConnectionResumeComplete) message in response to a request message from the base station apparatus 20. The path information available information may be included in the RRC connection resume complete message, or another RRC message defined in a standard such as 5G.

The path information available information may be transmitted in a case where an RRC connection is reconfigured between the terminal apparatus 10 and the base station apparatus 20. In a case where the RRC connection is reconfigured, the transmitter 121 transmits, to the base station apparatus 20, an RRC connection reconfiguration complete (RRCConnectionReconfigurationComplete) message in response to a request message from the base station apparatus 20. The path information available information may be included in the RRC connection reconfiguration complete message, or another RRC message defined in a standard such as 5G.

The path information available information may be transmitted in a case where the terminal apparatus 10 notifies the base station apparatus 20 of an internal state. In a case where the terminal apparatus 10 notifies the base station apparatus 20 of the internal state, the transmitter 121 transmits, to the base station apparatus 20, a UE assistance information (UEAssistanceInformation) message in response to an RRC reconfiguration (RRCReconfiguration) message from the base station apparatus 20. The path information available information may be included in the UE assistance information message, or another RRC message defined in a standard such as 5G.

In a case where the receiver 222 of the communicator 220 in the base station apparatus 20 receives the path information available information, the controller 210 generates path information request (PathInfoReq) information. Subsequently, the transmitter 221 transmits the path information request information to the terminal apparatus 10 (step S802). The path information request information is an information element for requesting the path information. The path information request information includes flight path information request (flightPathInfoReq) information defined for path information of the terminal apparatus 10 according to movement of the UAV.

The path information request information may be transmitted in a case where the base station apparatus 20 requests the terminal apparatus 10 to report the information. In a case where the base station apparatus 20 requests the terminal apparatus 10 to report the information, the transmitter 221 transmits a UE information request (UEInformationRequest) message to the terminal apparatus 10. The path information request information may be included in the UE information request message, or another RRC message defined in a standard such as 5G.

In a case where the receiver 122 of the communicator 120 in the terminal apparatus 10 receives the path information request information, the controller 110 generates path information report (PathInfoReport) information. Subsequently, the transmitter 121 transmits the path information report information to the base station apparatus 20 (step S803). The path information report information is an information element for reporting path information of the terminal apparatus 10, and includes path information of the UAV. The path information may include an actual time of arrival in a case where the terminal apparatus 10 has arrived at a waypoint / estimated time of arrival in a case where the terminal apparatus 10 is estimated to arrive at the waypoint, location information of the waypoint, location information of the terminal apparatus 10, information related to a planned flight path, and the like.

For example, the path information report information is generated by determining, based on information received from the GPS or the like, location information of a waypoint at which the terminal apparatus 10 has arrived / is estimated to arrive, and a time when the terminal apparatus 10 has arrived at / is estimated to arrive at the waypoint. The path information report information includes flight path information report (flightPathInfoReport) information defined for path information of the terminal apparatus 10 according to movement of the UAV.

The path information report information may be transmitted in a case where the terminal apparatus 10 reports the information to the base station apparatus 20. In a case where the terminal apparatus 10 reports the information to the base station apparatus 20, the transmitter 121 transmits a UE information response (UEInformationResponse) message to the terminal apparatus 10 in response to the UE information request message from the base station apparatus 20. The path information report information may be included in the UE information response message, or another RRC message defined in a standard such as 5G. In the present embodiment, a message may be referred to as information and/or an information element.

In the processing illustrated in Fig. 8, the path information report information is transmitted in response to transmission of the path information available information by the terminal apparatus 10 or in response to transmission of the path information request information by the base station apparatus 20, but the processing is not limited to such an example. The path information report information may be actively transmitted from the terminal apparatus 10 without the path information available information being transmitted by the terminal apparatus 10. The path information report information may be actively transmitted from the terminal apparatus 10 without the path information request information being transmitted by the base station apparatus 20.

The path information report information may be periodically transmitted, for example. For example, the path information report information may be transmitted in response to the presence of a change in the path information, such as a certain waypoint being passed through by the terminal apparatus 10, a change in the movement path. In this case, the controller 110 of the terminal apparatus 10 acquires information from the GPS periodically and detects whether a change in the path information is present, such as a predetermined waypoint being passed through by the terminal apparatus 10, for example.

### 2. First Embodiment

Next, a first embodiment will be described. In the first embodiment, the terminal apparatus 10 transmits, to the base station apparatus 20, error information and/or accuracy information related to the path information together with the path information. Due to factor(s) such as weather, a surrounding environment, and/or performance of the UAV itself, there is a case where the terminal apparatus 10 arrives at a waypoint late or early. This case is represented as an error related to a time when the terminal apparatus 10 arrives at a predetermined point, such as a waypoint, in other words, a temporal error.

There is also a case where the UAV moves at a certain distance away from a planned flight path. This case is represented as an error related to a location at which the terminal apparatus 10 moves along a planned flight path, in other words, a spatial error.

As described above, the path information reported to the base station apparatus 20 by the terminal apparatus 10 includes a temporal error and/or a spatial error for a movement path of the UAV. The temporal error and the spatial error are collectively referred to as an error.

For example, the terminal apparatus 10 receives, from the air traffic control system, an estimated time of arrival at a waypoint at a certain timing, and compares the estimated time of arrival with an actual time of arrival at the waypoint, thereby enabling a temporal error for the path information to be calculated. Likewise, for example, the terminal apparatus 10 receives, from the GPS, location information of the terminal apparatus 10 itself at a certain timing, and compares the location information with a planned path, thereby enabling a spatial error for the path information to be calculated.

As described above, the terminal apparatus 10 transmits, to the base station apparatus 20, the path information including the estimated time of arrival of the terminal apparatus 10 to the waypoint. However, the base station apparatus 20 fails to recognize, based on the estimated time of arrival, how late or early the terminal apparatus 10 has arrived at / is estimated to arrive at the waypoint.

The path information may include location information of the terminal apparatus 10, and notifying the location information of the terminal apparatus 10 enables the base station apparatus 20 to recognize an actual location of the terminal apparatus 10. However, the base station apparatus 20 fails to recognize, based on the location information, how far the terminal apparatus 10 moves from the planned path.

For example, in a case where the terminal apparatus 10 arrives at the waypoint earlier than the estimated time of arrival, and the base station apparatus 20 fails to recognize this case, there is a possibility that the base station apparatus 20 overlooks a case that the terminal apparatus 10 has passed through the waypoint. In a case where the terminal apparatus 10 arrives at the waypoint later than the estimated time of arrival, and the base station apparatus 20 fails to recognize this case, there is a possibility of wasteful consumption of radio resources and power due to the base station apparatus 20 waiting for the terminal apparatus 10 to arrive at the waypoint more than necessary.

In the present embodiment, the terminal apparatus 10 transmits, to the base station apparatus 20, the above-described information related to the error for the movement path together with the path information. The information related to the error for the movement path is referred to hereinafter as error information, deviation information, mismatch information, or difference information. Hereinafter, "error," "deviation," "mismatch," and "difference" are interchangeably used.

The error information includes a temporal error and/or a spatial error. The temporal error includes an error related to a time when the terminal apparatus 10 arrives at a predetermined point. The temporal error may be estimated by the terminal apparatus 10 by using a predefined value, a calculation method, or the like, and, in this case, the temporal error includes a temporal error at a level estimated by the terminal apparatus 10. Notifying the temporal error enables the base station apparatus 20 to recognize how late or early the terminal apparatus 10 has arrived at / is estimated to arrive at a waypoint.

The spatial error includes an error related to a location at which the terminal apparatus 10 moves on a planned path. The spatial error may be estimated by the terminal apparatus 10 by using a predefined value, a calculation method, or the like, and, in this case, the location error includes a temporal error at a level estimated by the terminal apparatus 10. Notifying the spatial error enables the base station apparatus 20 to recognize how far the terminal apparatus 10 moves from the planned path.

In place of the above-described error information, accuracy information or precision information may be transmitted together with the path information. Hereinafter, "accuracy" and "precision" are interchangeably used. The accuracy information includes temporal accuracy and/or spatial accuracy. The temporal accuracy includes accuracy related to a time when the terminal apparatus 10 arrives at a predetermined point. The temporal accuracy may be estimated by the terminal apparatus 10 by using a predefined value, a calculation method, or the like, and, in this case, the temporal error includes temporal accuracy at a level estimated by the terminal apparatus 10. Notifying the temporal accuracy also enables the base station apparatus 20 to recognize how late or early the terminal apparatus 10 has arrived at / is estimated to arrive at a waypoint.

The spatial accuracy includes accuracy related to a location at which the terminal apparatus 10 moves on a planned path. The spatial accuracy may be estimated by the terminal apparatus 10 by using a predefined value, a calculation method, or the like, and, in this case, the spatial error includes spatial accuracy at a level estimated by the terminal apparatus 10. Notifying the spatial accuracy also enables the base station apparatus 20 to recognize how far the terminal apparatus 10 moves from the planned path.

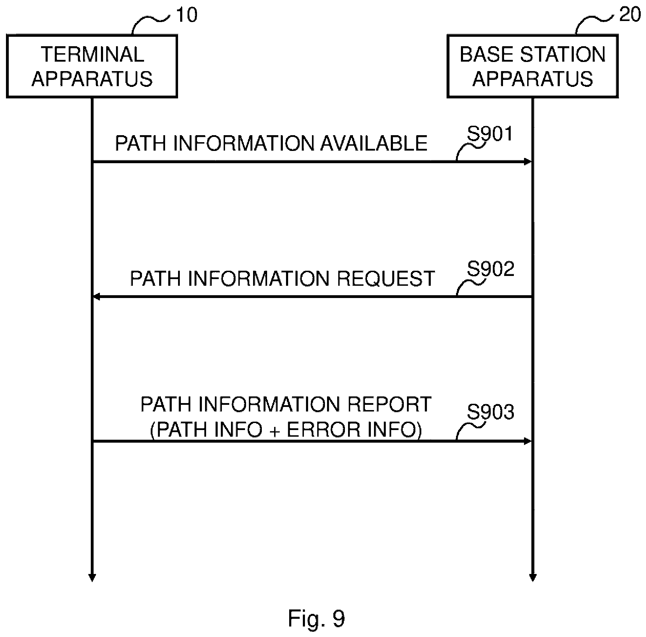

Processing in which the terminal apparatus 10 transmits, to the base station apparatus 20, the error information together with the path information will be described with reference to Fig. 9. The path information and the error information are transmitted by an RRC message. The path information is transmitted in accordance with the scheme illustrated in Fig. 8. Note that the path information and the error information may be exchanged not only via the RRC message, but also via a message in another layer. For example, the path information may be exchanged via a MAC control element (MAC CE).

First, the controller 110 of the terminal apparatus 10 generates path information available information, and the transmitter 121 of the communicator 120 transmits the path information available information to the base station apparatus 20 (step S901). Processing for generating and transmitting the path information available information is the same as the processing illustrated in Fig. 8, and thus detailed description thereof will be omitted.

In a case where the receiver 222 of the communicator 220 in the base station apparatus 20 receives the path information available information, the controller 210 generates path information request information. Subsequently, the transmitter 221 transmits the path information request information to the terminal apparatus 10 (step S902). Processing for generating and transmitting the path information request information is the same as the processing illustrated in Fig. 8, and thus detailed description thereof will be omitted.

In a case where the receiver 122 of the communicator 120 in the terminal apparatus 10 receives the path information request information, the controller 110 generates path information report information. Subsequently, the transmitter 121 transmits the path information report information to the base station apparatus 20 (step S903). The path information report information includes the path information and the error information.

As described above, the path information includes an estimated time of arrival / actual time of arrival of the terminal apparatus 10 to the waypoint. The terminal apparatus 10 and the air traffic control system exchange information, such as planned path information and location information, thereby allowing the estimated time of arrival at the waypoint and the actual time of arrival at the waypoint to be calculated by the terminal apparatus 10 or the air traffic control system. The path information may include location information, such as an altitude and/or a location at which the terminal is located.

The error information includes a temporal error related to a time when the terminal apparatus 10 arrives at a predetermined point and a spatial error related to a location at which the terminal apparatus 10 moves on a planned path. The temporal error includes, for example, a time difference between an estimated time of arrival t1 of the terminal apparatus 10 to a predetermined waypoint at a time T1 and an estimated time of arrival t2 of the terminal apparatus 10 to the waypoint at a time T2 after T1. This is, for example, because there is a case where the estimated time of arrival at the waypoint varies due to a factor, such as weather, as time passes.

The temporal error includes, for example, a time difference between an estimated time of arrival t1 of the terminal apparatus 10 to a predetermined waypoint at a time T1 and an actual time of arrival t2 of the terminal apparatus 10 to the waypoint at a time T2. This is, for example, because there is a case of the arrival at the waypoint earlier/later than estimated due to a factor, such as weather.

Furthermore, the temporal error includes a fixed value derived from a previously calculated temporal error or derived by using another method. For example, the fixed value may be an average value of previously calculated temporal errors for each terminal apparatus 10, or the like, and may be a value, such as +5 seconds and -5 seconds. +5 seconds means that it arrives at the waypoint 5 seconds behind an estimated time, and -5 seconds means that it arrives at the waypoint 5 seconds ahead of an estimated time. The fixed value may be derived in consideration of a factor affecting movement of the terminal apparatus 10, such as performance of the terminal apparatus 10 and weather.

Further, the spatial error includes a distance between an actual location of the terminal apparatus 10 and the planned path or a certain range of the planned path. This is, for example, because there is a case where the terminal apparatus 10 moves beyond a certain range of the planned path due to a factor, such as a strong wind.

Furthermore, the spatial error includes a fixed value derived from a previously calculated spatial error or derived by using another method. For example, the fixed value may be an average value of previously calculated spatial errors for each terminal apparatus 10, or the like, and may be a value, such as 10 meters. 10 meters means that the terminal apparatus 10 moves 10 meters away from the planned path or a certain range of the planned path. The fixed value may be derived in consideration of a factor affecting movement of the terminal apparatus 10, such as performance of the terminal apparatus 10 and weather.

The temporal error included in the error information may be a value indicating the above-described temporal error, for example, a value expressed in units, such as hours, minutes, seconds, and milliseconds. Alternatively, the temporal error included in the error information may be an index value indicating a value or a numerical range indicating the temporal error. Table 1 illustrates an example of a table of mapping between a predefined temporal error range and a corresponding index value. In this case, the base station apparatus 20 stores such a mapping table as that illustrated in Table 1, and acquires a corresponding temporal error or temporal error range, based on an index value.

**[Table 1]**

| INDEX VALUE | TEMPORAL ERROR RANGE (SECOND) |
|---|---|
| 1 | 1 - 10 |
| 2 | 11 - 20 |
| ... | ... |
| TABLE 1 INDEX VALUE - TEMPORAL ERROR RANGE | |

The temporal error included in the error information may be a value indicating an error class or an error rank defined for each numerical range indicating a temporal error. Hereinafter, "class" and "rank" are interchangeably used. The error class may include, for example, three classes "low," "middle," and "high." Alternatively, the temporal error included in the error information may be an index value indicating an error class. Table 2 illustrates an example of a table of mapping between a predefined temporal error range, a corresponding error class, and a corresponding index value. In this case, the base station apparatus 20 stores such a mapping table as that illustrated in Table 2, and acquires a corresponding error class, based on an index value.

**[Table 2]**

| INDEX VALUE | ERROR CLASS | TEMPORAL ERROR RANGE (SECOND) |
|---|---|---|
| 1 | LOW | 1 - 100 |
| 2 | MIDDLE | 101 - 1000 |
| 3 | HIGH | 1001 - 10000 |
| TABLE 2 INDEX VALUE - ERROR CLASS - TEMPORAL ERROR RANGE | | |

Furthermore, the temporal error included in the error information may be a value indicating whether the temporal error exceeds a predefined reference value, an allowable error, a threshold, or a limit. Hereinafter, "reference value," "allowable error," "threshold," and "limit" are interchangeably used. The reference value may be, for example, a value, such as 5 seconds which means that the temporal error is 5 seconds or below. For example, the temporal error may include values of 0 (within the reference value) and 1 (not within the reference value). The reference value may be a value defined for the entire system, or may be a value defined for each base station apparatus 20, each cell, or each cell group. In a case where the reference value is a value defined for each base station apparatus 20, each cell, or each cell group, the reference value is notified from the base station apparatus 20 by the path information request information, for example.

The spatial error included in the error information may be a value indicating the above-described spatial error, for example, a value expressed in units, such as kilometers and meters. Alternatively, the spatial error included in the error information may be an index value indicating a value or a numerical range indicating the spatial error. Table 3 illustrates an example of a table of mapping between a predefined spatial error range and a corresponding index value. In this case, the base station apparatus 20 stores such a mapping table as that illustrated in Table 3, and acquires a corresponding spatial error or spatial error range, based on an index value.

**[Table 3]**

| INDEX VALUE | SPATIAL ERROR RANGE (METER) |
|---|---|
| 1 | 1 - 10 |
| 2 | 11 - 20 |
| ... | ... |
| TABLE 3 INDEX VALUE - SPATIAL ERROR RANGE | |

The spatial error included in the error information may be a value indicating an error class defined for each numerical range indicating a spatial error. The error class may include, for example, three classes "low," "middle," and "high." Alternatively, the spatial error included in the error information may be an index value indicating an error class. Table 4 illustrates an example of a table of mapping between a predefined spatial error range, a corresponding error class, and a corresponding index value. In this case, the base station apparatus 20 stores such a mapping table as that illustrated in Table 4, and acquires a corresponding error class, based on an index value.

**[Table 4]**

| INDEX VALUE | ERROR CLASS | SPATIAL ERROR RANGE (METER) |
|---|---|---|
| 1 | LOW | 1 - 100 |
| 2 | MIDDLE | 101 - 1000 |
| 3 | HIGH | 1001 - 10000 |
| TABLE 4 INDEX VALUE - ERROR CLASS - SPATIAL ERROR RANGE | | |

Furthermore, the spatial error included in the error information may be a value indicating whether the spatial error exceeds a predefined reference value. The reference value may be, for example, a value, such as 10 meters which means that the spatial error is 10 meters or below. For example, the spatial error may include values of 0 (within the reference value) and 1 (not within the reference value). The reference value may be defined and notified in a manner similar to that of the reference value for the above-described temporal error.

Transmitting, to the terminal apparatus 20, the error information together with the path information enables the base station apparatus 20 to recognize how late or early the terminal apparatus 10 has arrived at / is estimated to arrive at a waypoint. For example, the base station apparatus 20 may determine whether the temporal error exceeds a predefined reference value, and may, in a case where the temporal error exceeds the predefined reference value, determine that the temporal error exceeds an allowable error. The same applies to the spatial error. The reference value may be a value defined for the entire system, or may be a value defined for each base station apparatus 20, each cell, or each cell group.

In response to determining that the temporal error exceeds a predefined reference value, for example, that the terminal apparatus 10 is estimated to arrive at a waypoint later than a reference value, the base station apparatus 20 may request the terminal apparatus 10 to retransmit the path information, for example. For example, this request is made by the path information request information being transmitted to the terminal apparatus 10 by the base station apparatus 20. In place of requesting the path information to be retransmitted, the base station apparatus 20 may request the terminal apparatus 10 to change the path information.

In response to determining that the temporal error exceeds a predefined reference value, for example, that the terminal apparatus 10 has arrived at a waypoint earlier than a reference value, the base station apparatus 20 may start measurement for the terminal apparatus 10.

Furthermore, in response to determining that the temporal error exceeds a predefined reference value, for example, that the terminal apparatus 10 is estimated to arrive at a waypoint later than a reference value, the terminal apparatus 10 may change the path information, for example. In a case where changing the path information, the terminal apparatus 10 may transmit, to the base station apparatus 20, an indication indicating the change in the path information, as path information.

In place of or in addition to the above-described error information, accuracy information may be transmitted. The accuracy information includes temporal accuracy related to a time when the terminal apparatus 10 arrives at a predetermined point and spatial accuracy related to a location at which the terminal apparatus 10 moves on a planned path. The temporal accuracy includes, for example, a time difference between an estimated time of arrival t1 of the terminal apparatus 10 to a predetermined waypoint at a time T1 and an estimated time of arrival t2 of the terminal apparatus 10 to the waypoint at a time T2 after T1.

The temporal accuracy includes, for example, a time difference between an estimated time of arrival t1 of the terminal apparatus 10 to a predetermined waypoint at a time T1 and an actual time of arrival t2 of the terminal apparatus 10 to the waypoint at a time T2.

Furthermore, the temporal accuracy includes a fixed value derived from previously calculated temporal accuracy or derived by using another method. For example, the fixed value may be an average value of previously calculated temporal accuracy for each terminal apparatus 10, or the like, and may be a value, such as +5 seconds and -5 seconds. +5 seconds means that it arrives at the waypoint 5 seconds or less behind an estimated time, and -5 seconds means that it arrives at the waypoint 5 seconds or less ahead of an estimated time. The fixed value may be derived in consideration of a factor affecting movement of the terminal apparatus 10, such as performance of the terminal apparatus 10 and weather.

Further, the spatial accuracy includes a distance between an actual location of the terminal apparatus 10 and the planned path or a certain range of the planned path.

Furthermore, the spatial accuracy includes a fixed value derived from previously calculated spatial accuracy or derived by using another method. For example, the fixed value may be an average value of previously calculated spatial accuracy for each terminal apparatus 10, or the like, and may be a value, such as 10 meters. 10 meters means that a distance at which the terminal apparatus 10 moves away from the planned path or a certain range of the planned path is 10 meters or below. The fixed value may be derived in consideration of a factor affecting movement of the terminal apparatus 10, such as performance of the terminal apparatus 10 and weather.

The temporal accuracy included in the accuracy information may be a value indicating the above-described temporal accuracy, for example, a value expressed in units, such as hours, minutes, seconds, and milliseconds. Alternatively, the temporal accuracy included in the accuracy information may be an index value indicating a value or a numerical range indicating the temporal accuracy. Table 5 illustrates an example of a table of mapping between a predefined temporal accuracy range and a corresponding index value. In this case, the base station apparatus 20 stores such a mapping table as that illustrated in Table 5, and acquires corresponding temporal accuracy or temporal accuracy range, based on an index value.

**[Table 5]**

| INDEX VALUE | TEMPORAL ACCURACY RANGE (SECOND) |
|---|---|
| 1 | 1 - 10 |
| 2 | 11 - 20 |
| ... | ... |
| TABLE 5 INDEX VALUE - TEMPORAL ACCURACY RANGE | |

The temporal accuracy included in the accuracy information may be a value indicating an accuracy class defined for each numerical range indicating temporal accuracy. The accuracy class may include, for example, three classes "high," "middle," and "low." Alternatively, the temporal accuracy included in the accuracy information may be an index value indicating an accuracy class. Table 6 illustrates an example of a table of mapping between a predefined temporal accuracy range, a corresponding accuracy class, and a corresponding index value. In this case, the base station apparatus 20 stores such a mapping table as that illustrated in Table 6, and acquires a corresponding accuracy class, based on an index value.

**[Table 6]**

| INDEX VALUE | ACCURACY CLASS | TEMPORAL ACCURACY RANGE (SECOND) |
|---|---|---|
| 1 | HIGH | 1 - 100 |
| 2 | MIDDLE | 101 - 1000 |
| 3 | LOW | 1001 - 10000 |
| TABLE 6 INDEX VALUE - ACCURACY CLASS - TEMPORAL ACCURACY RANGE | | |

Furthermore, the temporal accuracy included in the accuracy information may be a value indicating whether the temporal accuracy is within a predefined reference value. The reference value may be, for example, a value, such as 5 seconds which means that the temporal accuracy is 5 seconds or below. For example, the temporal accuracy may include values of 0 (within the reference value) and 1 (not within the reference value). The reference value may be a value defined for the entire system, or may be a value defined for each base station apparatus 20, each cell, or each cell group. In a case where the reference value is a value defined for each base station apparatus 20, each cell, or each cell group, the reference value is notified from the base station apparatus 20 by the path information request information, for example.

The spatial accuracy included in the accuracy information may be a value indicating the above-described spatial accuracy, for example, a value expressed in units, such as kilometers and meters. Alternatively, the spatial accuracy included in the accuracy information may be an index value indicating a value or a numerical range indicating the spatial accuracy. Table 7 illustrates an example of a table of mapping between a predefined spatial accuracy range and a corresponding index value. In this case, the base station apparatus 20 stores such a mapping table as that illustrated in Table 7, and acquires corresponding spatial accuracy or spatial accuracy range, based on an index value.

**[Table 7]**

| INDEX VALUE | SPATIAL ACCURACY RANGE (METER) |
|---|---|
| 1 | 1 - 10 |
| 2 | 11 - 20 |
| ... | ... |
| TABLE 7 INDEX VALUE - SPATIAL ACCURACY RANGE | |

The spatial accuracy included in the accuracy information may be a value indicating an accuracy class defined for each numerical range indicating spatial accuracy. The accuracy class may include, for example, three classes "high," "middle," and "low." Alternatively, the spatial accuracy may be an index value indicating an accuracy class. Table 8 illustrates an example of a table of mapping between a predefined spatial accuracy range, a corresponding accuracy class, and a corresponding index value. In this case, the base station apparatus 20 stores such a mapping table as that illustrated in Table 8, and acquires a corresponding accuracy class, based on an index value.

**[Table 8]**

| INDEX VALUE | ACCURACY CLASS | SPATIAL ACCURACY RANGE (METER) |
|---|---|---|
| 1 | HIGH | 1 - 100 |
| 2 | MIDDLE | 101 - 1000 |
| 3 | LOW | 1001 - 10000 |
| TABLE 8 INDEX VALUE - ACCURACY CLASS - SPATIAL ACCURACY RANGE | | |

Furthermore, the spatial accuracy included in the accuracy information may be a value indicating whether the spatial accuracy is within a predefined reference value. The reference value may be, for example, a value, such as 10 meters which means that the spatial accuracy is 10 meters or below. For example, the spatial accuracy may include values of 0 (within the reference value) and 1 (not within the reference value). The reference value may be defined and notified in a manner similar to that of the reference value for the above-described temporal accuracy.

Transmitting, to the terminal apparatus 20, the accuracy information together with the path information enables the base station apparatus 20 to recognize how late or early the terminal apparatus 10 has arrived at / is estimated to arrive at a waypoint. In other words, the accuracy information can also serve as the same function as that of the error information. Hereinafter, the examples described for the error information are also similarly applied to the accuracy information.

Note that the error information and/or the accuracy information is included in the path information report information, together with the path information, and is transmitted, but does not necessarily need to be transmitted simultaneously. For example, the error information and/or the accuracy information may be transmitted at a timing different from that of the path information. In this case, for example, the error information and/or the accuracy information may be included in a UE information report message.

### 2-1. Overall Application of Error Information

In the present section, an example in which error information is applied to entire path information will be described. In the present example, the terminal apparatus 10 calculates a temporal error and/or a spatial error, to thereby generate the error information. As described above, the path information report information may be transmitted periodically or in response to the presence of a change in the path information. In any case, the terminal apparatus 10 generates error information for each of a plurality of waypoints.

In the present section, the error information is generated by calculating an estimated time of arrival at a waypoint, but is not limited to such an example. For example, the error information may also be generated by calculating an estimated time of arrival / actual time of arrival at a waypoint, calculating an average value of previously calculated temporal errors, or the like.

In the present section, an example in which the terminal apparatus 10 generates and transmits error information to be applied to an entire path will be described. The error information is included in path information report information together with path information. Processing for generating and transmitting the path information report information is the same as the processing illustrated in Fig. 9, and thus detailed description thereof will be omitted.

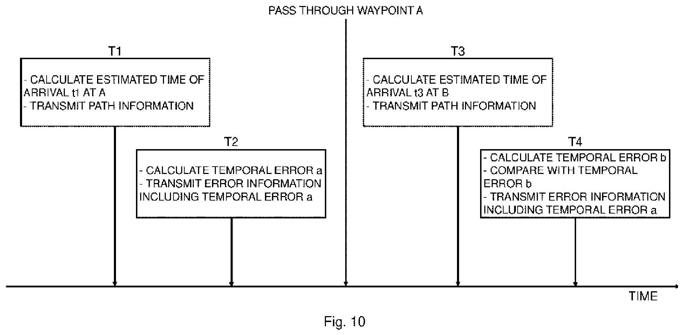

The example in which the terminal apparatus 10 generates and transmits the error information to be applied to the entire path will be described with reference to Fig. 10. In the example illustrated in Fig. 10, assume that the terminal apparatus 10 moves toward a waypoint A, and then moves toward a waypoint B after passing through the waypoint A. First, at a time T1, the terminal apparatus 10 calculates an estimated time of arrival t1 at the waypoint A and transmits, to the base station apparatus 20, path information including the estimated time of arrival t1.

Next, at a time T2 after T1, the terminal apparatus 10 calculates an estimated time of arrival t2 at the waypoint A and calculates a temporal error a between the estimated time of arrival t2 and the estimated time of arrival t1. The terminal apparatus 10 transmits, to the base station apparatus 20, the path information including the estimated time of arrival t2, and the error information including the temporal error a. As described above, the time error a may be a value indicating a temporal error between the estimated time of arrival t1 and the estimated time of arrival t2, an index value indicating an error class, or the like.

Subsequently, the terminal apparatus 10 passes through the waypoint A, and moves toward the waypoint B. Next, at a time T3 after T2, the terminal apparatus 10 calculates an estimated time of arrival t3 at the waypoint B and transmits, to the base station apparatus 20, the path information including the estimated time of arrival t3.

Next, at a time T4 after T3, the terminal apparatus 10 calculates an estimated time of arrival t4 at the waypoint B and calculates a temporal error b between the estimated time of arrival t4 and the estimated time of arrival t3. The terminal apparatus 10 transmits, to the base station apparatus 20, the path information including the estimated time of arrival t3, and the error information. At this time, the terminal apparatus 10 may compare the temporal error b with the temporal error a, and the error information may include the temporal error a in a case where the time difference between the temporal error b and the temporal error a is within a predefined threshold range, in other words, within a certain range. On the other hand, the error information may include the temporal error b in a case where the time difference between the temporal error b and the temporal error a exceeds the predefined threshold range.

In the example described in the present section, in a case where a temporal error a calculated at a certain timing, which is, in the example illustrated in Fig. 10, a timing at which the error information is first transmitted, does not vary within a threshold range, the temporal error a is applied to the entire path. The temporal error b may not be calculated, and the temporal error a calculated at the time T2 may be included in error information to be transmitted thereafter.

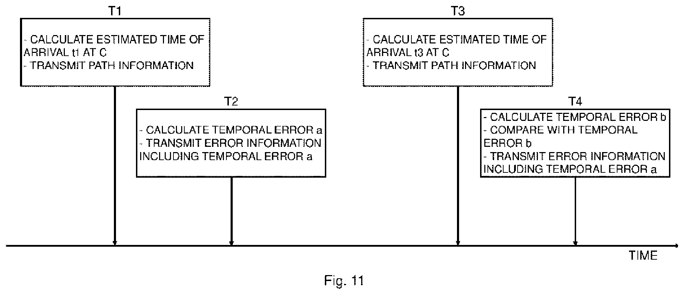

In place of calculating the temporal error for the waypoint, a temporal error for the terminal apparatus 10 to arrive at a final destination may be calculated periodically or in response to a change in the path information. An example in which the terminal apparatus 10 generates and transmits error information for a final destination C will be described with reference to Fig. 11.

First, at a time T1, the terminal apparatus 10 calculates an estimated time of arrival t1 at the final destination C and transmits, to the base station apparatus 20, path information including the estimated time of arrival t1. For example, the estimated time of arrival t1 is calculated periodically while the terminal apparatus 10 is moving, based on information, such as location coordinates of the final destination C transmitted from the air traffic control system.

Next, at a time T2 after T1, the terminal apparatus 10 calculates an estimated time of arrival t2 at the final destination C and calculates a temporal error a between the estimated time of arrival t2 and the estimated time of arrival t1. The terminal apparatus 10 transmits, to the base station apparatus 20, the path information including the estimated time of arrival t1, and the error information including the temporal error a. As described above, the time error a may be a value indicating a temporal error between the estimated time of arrival t1 and the estimated time of arrival t2, an index value indicating an error class, or the like.

Next, at a time T3 after T2, the terminal apparatus 10 calculates an estimated time of arrival t3 at the final destination C and transmits, to the base station apparatus 20, the path information including the estimated time of arrival t3.

Next, at a time T4 after T3, the terminal apparatus 10 calculates an estimated time of arrival t4 at the final destination C and calculates a temporal error b between the estimated time of arrival t4 and the estimated time of arrival t3. The terminal apparatus 10 transmits, to the base station apparatus 20, the path information including the estimated time of arrival t3, and the error information. At this time, the terminal apparatus 10 may compare the temporal error b with the temporal error a, and the error information may include the temporal error a in a case where the time difference between the temporal error b and the temporal error a is within a predefined threshold range. On the other hand, the error information may include the temporal error b in a case where the time difference between the temporal error b and the temporal error a exceeds the predefined threshold range.

Also in the case where the temporal error for the final destination is calculated, in a case where a temporal error a calculated at a certain timing, which is, in the example illustrated in Fig. 11, a timing at which the error information is first transmitted, does not vary within a threshold range, the temporal error a is applied to the entire path. The temporal error b may not be calculated, and the temporal error a calculated at the time T2 may be included in error information to be transmitted thereafter.

In the present section, the example in which a temporal error calculated at a certain timing is applied to an entire subsequent path has been described. This example may also be similarly applied to the spatial error.

2-2. Application of Error Information for Each Waypoint

In the present section, an example in which error information is applied for each waypoint will be described. In the present example, the terminal apparatus 10 calculates a temporal error and/or a spatial error, to thereby generate the error information together with path information. As described above, the path information report information may be transmitted periodically or in response to the presence of a change in the path information. In any case, the terminal apparatus 10 generates error information for each of a plurality of waypoints.

In the present section, the error information is generated by calculating an estimated time of arrival at a waypoint, but is not limited to such an example. For example, the error information may also be generated by calculating an estimated time of arrival / actual time of arrival at a waypoint, calculating an average value of previously calculated temporal errors, or the like.

In the present section, an example in which the terminal apparatus 10 generates and transmits error information to be applied for each waypoint will be described. The error information is included in path information report information together with path information. Processing for generating and transmitting the path information report information is the same as the processing illustrated in Fig. 9, and thus detailed description thereof will be omitted.

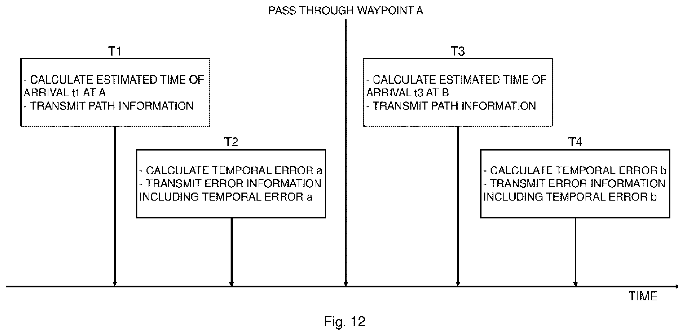

The example in which the terminal apparatus 10 generates and transmits the error information to be applied for each waypoint will be described with reference to Fig. 12. In the example illustrated in Fig. 12, assume that the terminal apparatus 10 moves toward a waypoint A, and then moves toward a waypoint B after passing through the waypoint A. First, at a time T1, the terminal apparatus 10 calculates an estimated time of arrival t1 at the waypoint A and transmits, to the base station apparatus 20, path information including the estimated time of arrival t1.

Next, at a time T2 after T1, the terminal apparatus 10 calculates an estimated time of arrival t2 at the waypoint A and calculates a temporal error a between the estimated time of arrival t2 and the estimated time of arrival t1. The terminal apparatus 10 transmits, to the base station apparatus 20, the path information including the estimated time of arrival t2, and the error information including the temporal error a. As described above, the time error a may be a value indicating a temporal error between the estimated time of arrival t1 and the estimated time of arrival t2, an index value indicating an error class, or the like.

Subsequently, the terminal apparatus 10 passes through the waypoint A, and moves toward the waypoint B. Next, at a time T3 after T2, the terminal apparatus 10 calculates an estimated time of arrival t3 at the waypoint B and transmits, to the base station apparatus 20, the path information including the estimated time of arrival t3.

Next, at a time T4 after T3, the terminal apparatus 10 calculates an estimated time of arrival t4 at the waypoint B and calculates a temporal error b between the estimated time of arrival t4 and the estimated time of arrival t3. The terminal apparatus 10 transmits, to the base station apparatus 20, the path information including the estimated time of arrival t3, and the error information including the temporal error b.

In the example described in the present section, a temporal error for a waypoint is calculated for each waypoint and for each transmission of error information. This example may also be similarly applied to the spatial error.

### 2-3. Notification of Error Information as Capability Information

In the present section, an example in which error information is transmitted as capability information of the terminal apparatus 10 will be described. For example, in a case where a temporal error calculated previously for each terminal apparatus 10 is within a certain range, a fixed value derived from the previously calculated temporal error may be defined as a temporal error for each terminal apparatus 10.

The fixed value may be an average value of previously calculated temporal errors for each terminal apparatus 10, or the like, and may be a value, such as +5 seconds and -5 seconds. +5 seconds means that it arrives at the waypoint 5 seconds behind an estimated time, and -5 seconds means that it arrives at the waypoint 5 seconds ahead of an estimated time. The fixed value may be derived in consideration of a factor affecting movement of the terminal apparatus 10, such as performance of the terminal apparatus 10 and weather. As described above, the temporal error may be a value indicating the temporal error, an index value indicating an error class, or the like.

The terminal apparatus 10 may transmit error information including a temporal error configured for each terminal apparatus 10, together with path information. The error information may be included in the path information report information, as capability information.

The error information may be transmitted in a case where the terminal apparatus 10 notifies the base station apparatus 20 of a capability of the terminal apparatus 10 itself. In a case where the terminal apparatus 10 notifies the base station apparatus 20 of the capability of the terminal apparatus 10 itself, the terminal apparatus 10 transmits, to the base station apparatus 20, a UE capability information (UECapabilityInformation) message. As the capability information, the error information may be included in the UE capability information message, or another RRC message defined in a standard such as 5G. For example, such another RRC message may include the RRC connection setup complete message, the RRC connection reestablishment complete message, the RRC connection resume complete message, and the RRC connection reconfiguration complete message described above, and the like.

In the example described in the present section, a temporal error is defined for each terminal apparatus 10, and error information including the temporal error is transmitted as capability information. This example may also be similarly applied to the spatial error.

As described above, the processing according to the first embodiment has been described. According to the present embodiment, it is possible to notify the base station apparatus 20 of how late or early the terminal apparatus 10 has arrived at / is estimated to arrive at a predetermined point and how far the terminal apparatus 10 moves from a predetermined location.

### 3. Second Embodiment

Next, a second embodiment will be described. In the second embodiment, the base station apparatus 20 transmits, to the terminal apparatus 10, reference information for determining an error level and/or accuracy level, degree, or size for path information. Hereinafter, "level," "degree," and "size" are interchangeably used. The reference information for the error may include, for example, a requested temporal error and/or a requested spatial error requested to the terminal apparatus 10 by the base station apparatus 20. The requested temporal error and the requested spatial error are collectively referred to as a requested error. The requested temporal error and an allowable temporal error are interchangeably used, the requested spatial error and an allowable spatial error are interchangeably used, and the allowable temporal error and the allowable spatial error are collectively referred to as an allowable error.

The requested temporal error included in the reference information may be, for example, a value or a numerical range expressed in units, such as hours, minutes, seconds, and milliseconds. Alternatively, the requested temporal error included in the reference information may be an index value indicating a value or a numerical range indicating the requested temporal error. Table 9 illustrates an example of a table of mapping between a predefined requested temporal error range and a corresponding index value. In this case, the terminal apparatus 10 stores such a mapping table as that illustrated in Table 9, and acquires a requested temporal error range, based on an index value.

**[Table 9]**

| INDEX VALUE | REQUESTED TEMPORAL ERROR RANGE (SECOND) |
|---|---|
| 1 | 1 - 10 |
| 2 | 11 - 20 |
| ... | ... |
| TABLE 9 INDEX VALUE - REQUESTED TEMPORAL ERROR RANGE | |

The requested temporal error included in the reference information may be a value indicating an error class defined for each numerical range indicating a requested temporal error. The error class may include, for example, three classes "low," "middle," and "high." Alternatively, the requested temporal error included in the reference information may be an index value indicating an error class. Table 10 illustrates an example of a table of mapping between a predefined requested temporal error, a corresponding error class, and a corresponding index value. In this case, the terminal apparatus 10 stores such a mapping table as that illustrated in Table 10, and acquires a corresponding error class, based on an index value.

**[Table 10]**

| INDEX VALUE | REQUESTED ERROR CLASS | REQUESTED TEMPORAL ERROR RANGE (SECOND) |
|---|---|---|
| 1 | LOW | 1 - 100 |
| 2 | MIDDLE | 101 - 1000 |
| 3 | HIGH | 1001 - 10000 |
| TABLE 10 INDEX VALUE - REQUESTED ERROR CLASS - REQUESTED TEMPORAL ERROR RANGE | | |

The above-described form of the value of the requested temporal error is also applied to the requested spatial error. The reference information may be defined for the entire system, or may be defined for each base station apparatus 20, each cell, or each cell group.

The above-described reference information may be reference information for determining an accuracy level for the path information. The reference information for the accuracy may include, for example, requested temporal accuracy and/or requested spatial accuracy requested to the terminal apparatus 10 by the base station apparatus 20. The requested temporal accuracy and/or the requested spatial accuracy are collectively referred to as requested accuracy.

The requested temporal accuracy included in the reference information may be, for example, a value or a numerical range expressed in units, such as hours, minutes, seconds, and milliseconds. Alternatively, the requested temporal accuracy included in the reference information may be an index value indicating a value or a numerical range indicating the requested temporal accuracy. Table 11 illustrates an example of a table of mapping between a predefined requested temporal accuracy range and a corresponding index value. In this case, the terminal apparatus 10 stores such a mapping table as that illustrated in Table 11, and acquires a requested temporal accuracy range, based on an index value.

**[Table 11]**

| INDEX VALUE | REQUESTED TEMPORAL ACCURACY RANGE (SECOND) |
|---|---|
| 1 | 1 - 10 |
| 2 | 11 - 20 |
| ... | ... |
| TABLE 11 INDEX VALUE - REQUESTED TEMPORAL ACCURACY RANGE | |

The requested temporal accuracy included in the reference information may be a value indicating an accuracy class defined for each numerical range indicating requested temporal accuracy. The accuracy class may include, for example, three classes "high," "middle," and "low." Alternatively, the requested temporal accuracy included in the reference information may be an index value indicating an accuracy class. Table 12 illustrates an example of a table of mapping between a predefined requested temporal accuracy range, a corresponding accuracy class, and a corresponding index value. In this case, the terminal apparatus 10 stores such a mapping table as that illustrated in Table 12, and acquires a corresponding accuracy class, based on an index value.

**[Table 12]**

| INDEX VALUE | REQUESTED ACCURACY CLASS | REQUESTED TEMPORAL ACCURACY RANGE (SECOND) |
|---|---|---|
| 1 | HIGH | 1 - 100 |
| 2 | MIDDLE | 101 - 1000 |
| 3 | LOW | 1001 - 10000 |
| TABLE 12 INDEX VALUE - REQUESTED ACCURACY CLASS - REQUESTED TEMPORAL ACCURACY RANGE | | |

The above-described form of the value of the requested temporal accuracy is also applied to the requested spatial accuracy. The reference information may be a value defined for the entire system, or may be a value defined for each base station apparatus 20, each cell, or each cell group.

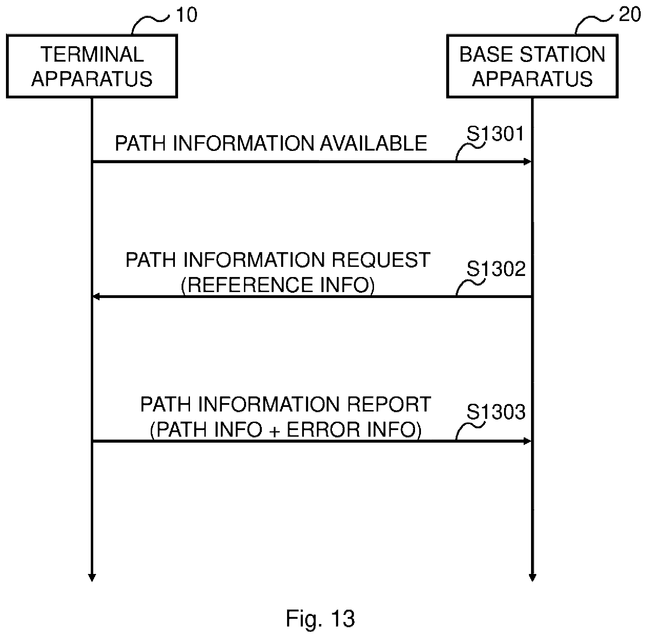

Next, processing in which the base station apparatus 20 transmits the reference information to the terminal apparatus 10 will be described with reference to Fig. 13. In response to receiving the reference information, the terminal apparatus 10 transmits, to the base station apparatus 20, corresponding error information together with the path information. The reference information, the path information, and the error information are transmitted by an RRC message. The path information and the error information are transmitted in accordance with the schemes illustrated in Figs. 8 and 9. Note that the reference information, the path information, and the error information may be exchanged not only via the RRC message, but also via a message in another layer. For example, the path information may be exchanged via a MAC control element (MAC CE).

First, the controller 110 of the terminal apparatus 10 generates path information available information, and the transmitter 121 of the communicator 120 transmits the path information available information to the base station apparatus 20 (step S1301). Processing for generating and transmitting the path information available information is the same as the processing illustrated in Fig. 8, and thus detailed description thereof will be omitted.

In a case where the receiver 222 of the communicator 220 in the base station apparatus 20 receives the path information available information, the controller 210 generates path information request information. Subsequently, the transmitter 221 transmits the path information request information to the terminal apparatus 10 (step S1302). The path information request information includes reference information for determining an error level and/or an accuracy level for path information to be transmitted at step S1302.

The reference information may be transmitted in a case where the base station apparatus 20 requests the terminal apparatus 10 to report the information. In a case where the base station apparatus 20 requests the terminal apparatus 10 to report the information, the transmitter 221 transmits a UE information request message to the terminal apparatus 10. The reference information may be included in the UE information request message, or another RRC message defined in a standard such as 5G.

The reference information may be transmitted in a case where an RRC connection is configured between the terminal apparatus 10 and the base station apparatus 20. In a case where the RRC connection is configured, the transmitter 221 transmits, to the base station apparatus 20, an RRC connection setup (RRCConnectionSetup) message. The reference information may be included in the RRC connection setup message, or another RRC message defined in a standard such as 5G.

The reference information may be transmitted in a case where an RRC connection is reestablished between the terminal apparatus 10 and the base station apparatus 20. In a case where the RRC connection is reestablished, the transmitter 221 transmits, to the base station apparatus 20, an RRC connection reestablishment (RRCConnectionReestablishment) message. The reference information may be included in the RRC connection reestablishment message, or another RRC message defined in a standard such as 5G.

The reference information may be transmitted in a case where an RRC connection is resumed between the terminal apparatus 10 and the base station apparatus 20. In a case where the RRC connection is resumed, the transmitter 221 transmits, to the base station apparatus 20, an RRC connection resume (RRCConnectionResume) message. The reference information may be included in the RRC connection resume message, or another RRC message defined in a standard such as 5G.

The reference information may be transmitted in a case where an RRC connection is reconfigured between the terminal apparatus 10 and the base station apparatus 20. In a case where the RRC connection is reconfigured, the transmitter 221 transmits, to the base station apparatus 20, an RRC connection reconfiguration (RRCConnectionReconfiguration) message. The reference information may be included in the RRC connection reconfiguration message, or another RRC message defined in a standard such as 5G.

In a case where the receiver 122 of the communicator 120 in the terminal apparatus 10 receives the path information request information including the reference information, the controller 110 generates path information report information. Subsequently, the transmitter 121 transmits the path information report information to the base station apparatus 20 (step S1303). The path information report information includes the path information. In a case where the path information request information includes reference information for determining an error level for the path information, an information report message includes error information. Furthermore, in a case where the path information request information includes reference information for determining an accuracy level for the path information, the path information report information includes accuracy information.

For example, in a case where the reference information includes a value or numerical range of a requested temporal error, the error information may include a value indicating whether a temporal error calculated by the terminal apparatus 10 exceeds the value or numerical range of the requested temporal error. For example, the error information may include values of 0 (exceeding the requested temporal error) and 1 (not exceeding the requested temporal error). For example, in a case where the reference information includes a value indicating an error class, the error information may include a value indicating which error class a temporal error calculated by the terminal apparatus 10 corresponds to. For example, the error information may include values of 1 (corresponding to a low class), 2 (corresponding to a middle class), and 3 (corresponding to a high class).

For example, in a case where the reference information includes a value or numerical range of requested temporal accuracy, the accuracy information may also similarly include a value indicating whether temporal accuracy calculated by the terminal apparatus 10 is within the value or numerical range of the requested temporal accuracy. For example, the accuracy information may include values of 0 (within the requested temporal accuracy) and 1 (not within the requested temporal accuracy). For example, in a case where the reference information includes a value indicating an accuracy class, the accuracy information may include a value indicating which accuracy class temporal accuracy calculated by the terminal apparatus 10 corresponds to. For example, the accuracy information may include values of 1 (corresponding to a high class), 2 (corresponding to a middle class), and 3 (corresponding to a low class).

The base station apparatus 20 transmits the reference information to the terminal apparatus 10, thereby enabling the terminal apparatus 10 to, for example, determine whether an error for path information to be transmitted is within a range of an error requested by the base station apparatus 20. Likewise, the terminal apparatus 10 can determine whether accuracy for path information to be transmitted is within a range of accuracy requested by the base station apparatus 20.

Note that, in the present embodiment, the base station apparatus 20 transmits the reference information to the terminal apparatus 10, but the present embodiment is not limited to such an example. For example, a requested temporal error and/or a requested spatial error may be defined for the entire system. In other words, reference information for determining an error level for the path information may be defined for the entire system. In this case, the terminal apparatus 10 generates, based on the defined reference information, error information without receiving reference information from the base station apparatus 20.

The case described above is also applied to the accuracy information. In other words, reference information for determining an accuracy level for the path information may be defined for the entire system. In this case, the terminal apparatus 10 transmits accuracy information corresponding to the defined reference information without receiving reference information from the base station apparatus 20.

As described above, the processing according to the second embodiment has been described. According to the present embodiment, the terminal apparatus 10 can determine how late or early the terminal apparatus 10 has arrived at / is estimated to arrive at a predetermined point and how far the terminal apparatus 10 moves from a predetermined location.

### 4. Alteration

Although the present disclosure has been described in accordance with the embodiments, it is understood that the present disclosure is not limited to the embodiments and configurations. The present disclosure also includes various alterations and alterations within the scope of equivalents. Other combinations including one or more elements included in the embodiments are also included in the scope and spirit of the present disclosure.

For example, in a case where procedure for handover from a source base station apparatus to a target base station apparatus is executed according to movement of the terminal apparatus 10, in a case where the terminal apparatus 10 transmits path information and error information to base station apparatus 20, the path information and the error information may also be transmitted to the target base station apparatus. In this case, in the handover procedure, the source base station apparatus receives the path information and the error information from the terminal apparatus 10, and the source base station apparatus forwards the path information and the error information to the target base station apparatus. Communication between the source base station apparatus and the target base station apparatus is executed through an Xn-C interface.

In a case where the handover procedure is executed, in a case where the terminal apparatus 10 transmits path information and accuracy information to base station apparatus 20, the path information and the accuracy information may also be transmitted to the target base station apparatus. In this case, in the handover procedure, the source base station apparatus receives the path information and the accuracy information from the terminal apparatus 10, and the source base station apparatus forwards the path information and the accuracy information to the target base station apparatus.

In the handover procedure described above, the terminal apparatus 10 generates a handover request acknowledge (HandoverRequestAcknowledge) message in response to receiving a handover request (HandoverRequest) message from the source base station apparatus, and transmits the generated message to the source base station apparatus. The path information and the error information may be included in the handover request acknowledge message.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, in a case where one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

### 5. Supplementary Notes

The whole or part of the embodiments and the alterations can be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

### (Supplementary Note 1)

A terminal apparatus (10) comprising:
a controller (110) configured to generate path information that is used by a base station apparatus (20) and related to a path of the terminal apparatus, and generate error information for the path information; and
a communicator (120) configured to transmit the error information to the base station apparatus.

### (Supplementary Note 2)

The terminal apparatus according to supplementary note 1, wherein
the error information includes a temporal error.

### (Supplementary Note 3)

The terminal apparatus according to supplementary note 2, wherein
the temporal error includes an error related to a time when the terminal apparatus arrives at a predetermined point.

### (Supplementary Note 4)

The terminal apparatus according to any one of supplementary notes 1 to 3, wherein
the error information includes a spatial error.

### (Supplementary Note 5)

The terminal apparatus according to supplementary note 4, wherein
the spatial error includes an error related to a location at which the terminal apparatus moves on a planned path.

### (Supplementary Note 6)

The terminal apparatus according to any one of supplementary notes 1 to 5, wherein
the communicator is further configured to receive, from the base station apparatus, reference information for determining an error level for the path information.

### (Supplementary Note 7)

The terminal apparatus according to supplementary note 6, wherein
the controller is further configured to generate the error information, based on the reference information.

### (Supplementary Note 8)

The terminal apparatus according to any one of supplementary notes 1 to 5, wherein
the controller is further configured to generate the error information, based on predefined reference information for determining an error level for the path information.

### (Supplementary Note 9)

The terminal apparatus according to any one of supplementary notes 1 to 8, wherein
the controller is further configured to generate the error information for an entire path on which the terminal apparatus moves.

### (Supplementary Note 10)

The terminal apparatus according to any one of supplementary notes 1 to 8, wherein
the controller is further configured to generate the error information for each point through which the terminal apparatus paths.

### (Supplementary Note 11)

The terminal apparatus according to any one of supplementary notes 1 to 10, wherein
the communicator is further configured to transmit the error information as capability information of the terminal apparatus.

### (Supplementary Note 12)

A terminal apparatus (10) comprising:
a controller (110) configured to generate path information that is used by a base station apparatus (20) and related to a path of the terminal apparatus, and generate accuracy information for the path information; and
a communicator (120) configured to transmit the accuracy information to the base station apparatus.

### (Supplementary Note 13)

The terminal apparatus according to supplementary note 12, wherein
the accuracy information includes temporal accuracy.

### (Supplementary Note 14)

The terminal apparatus according to supplementary note 13, wherein
the temporal accuracy includes accuracy related to a time when the terminal apparatus arrives at a predetermined point.

### (Supplementary Note 15)

The terminal apparatus according to any one of supplementary notes 12 to 14, wherein
the accuracy information includes spatial accuracy.

### (Supplementary Note 16)

The terminal apparatus according to supplementary note 15, wherein
the spatial accuracy includes accuracy related to a location at which the terminal apparatus moves on a planned path.

### (Supplementary Note 17)

The terminal apparatus according to any one of supplementary notes 12 to 16, wherein
the communicator is further configured to receive, from the base station apparatus, reference information for determining an accuracy level for the path information.

### (Supplementary Note 18)

The terminal apparatus according to supplementary note 17, wherein
the controller is further configured to generate the accuracy information, based on the reference information.

### (Supplementary Note 19)

The terminal apparatus according to any one of supplementary notes 12 to 16, wherein
the controller is further configured to generate the accuracy information, based on predefined reference information for determining an accuracy level for the path information.

### (Supplementary Note 20)

The terminal apparatus according to any one of supplementary notes 12 to 19, wherein
the controller is further configured to generate the accuracy information for an entire path on which the terminal apparatus moves.

### (Supplementary Note 21)

The terminal apparatus according to any one of supplementary notes 12 to 20, wherein
the controller is further configured to generate the accuracy information for each point through which the terminal apparatus paths.

### (Supplementary Note 22)

The terminal apparatus according to any one of supplementary notes 12 to 21, wherein
the communicator is further configured to transmit the accuracy information as capability information of the terminal apparatus.

### (Supplementary Note 23)

A base station apparatus (20) comprising:
a communicator (220) configured to receive error information for path information, the path information being information related to a path of a terminal apparatus (10); and
a controller (210) configured to use the error information.

### (Supplementary Note 24)

The base station apparatus according to supplementary note 23, wherein
the controller is further configured to generate reference information for determining an error level for the path information, and
the communicator is further configured to transmit the reference information to the terminal apparatus.

### (Supplementary Note 25)

The base station apparatus according to supplementary note 24, wherein
the error information is generated based on the reference information.

### (Supplementary Note 26)

The base station apparatus according to supplementary note 25, wherein
the error information indicates a temporal error.

### (Supplementary Note 27)

The base station apparatus according to supplementary note 26, wherein
the temporal error includes an error related to a time when the terminal apparatus arrives at a predetermined point.

### (Supplementary Note 28)

The base station apparatus according to any one of supplementary notes 25 to 27, wherein
the error information includes a spatial error.

### (Supplementary Note 29)

The base station apparatus according to supplementary note 28, wherein
the spatial error includes an error related to a location at which the terminal apparatus moves on a planned path.

### (Supplementary Note 30)

The base station apparatus according to any one of supplementary notes 24 to 29, wherein
the reference information is defined for each base station apparatus.

### (Supplementary Note 31)

The base station apparatus according to any one of supplementary notes 24 to 29, wherein
the reference information is defined for each cell.

### (Supplementary Note 32)

The base station apparatus according to any one of supplementary notes 24 to 29, wherein
the reference information is defined for each cell group.

### (Supplementary Note 33)

A base station apparatus (20) comprising:
a communicator (220) configured to receive accuracy information for path information, the path information being information related to a path of a terminal apparatus (10); and
a controller (210) configured to use the accuracy information.

### (Supplementary Note 34)

The base station apparatus according to supplementary note 33, wherein
the controller is further configured to generate reference information for determining an accuracy level for the path information, and
the communicator is further configured to transmit the reference information to the terminal apparatus.

### (Supplementary Note 35)

The base station apparatus according to supplementary note 34, wherein
the accuracy information is generated based on the reference information.

### (Supplementary Note 36)

The base station apparatus according to supplementary note 35, wherein
the accuracy information includes temporal accuracy.

### (Supplementary Note 37)

The base station apparatus according to supplementary note 36, wherein
the temporal accuracy includes accuracy related to a time when the terminal apparatus arrives a predetermined point.

### (Supplementary Note 38)

The base station apparatus according to any one of supplementary notes 35 to 37, wherein
the accuracy information includes spatial accuracy.

### (Supplementary Note 39)

The base station apparatus according to supplementary note 38, wherein
the spatial accuracy includes accuracy related to a location at which the terminal apparatus moves on a planned path.

### (Supplementary Note 40)

The base station apparatus according to any one of supplementary notes 34 to 39, wherein
the reference information is defined for each base station apparatus.

### (Supplementary Note 41)

The base station apparatus according to any one of supplementary notes 34 to 39, wherein
the reference information is defined for each cell.

### (Supplementary Note 42)

The base station apparatus according to any one of supplementary notes 34 to 39, wherein
the reference information is defined for each cell group.

### (Supplementary Note 43)

A method performed by a terminal apparatus (10), the method comprising:
generating path information that is used by a base station apparatus (20) and related to a path of the terminal apparatus, and generating error information for the path information; and
transmitting the error information to the base station apparatus.

### (Supplementary Note 44)

A method performed by a terminal apparatus (10), the method comprising:
generating path information that is used by a base station apparatus (20) and related to a path of the terminal apparatus, and generating accuracy information for the path information; and
transmitting the accuracy information to the base station apparatus.

### (Supplementary Note 45)

A method performed by a base station apparatus (20), the method comprising:
receiving error information for path information, the path information being information related to a path of a terminal apparatus (10); and
using the error information.

### (Supplementary Note 46)

A method performed by a base station apparatus (20), the method comprising:
receiving accuracy information for path information, the path information being information related to a path of a terminal apparatus (10); and
using the accuracy information.

### (Supplementary Note 47)

A program causing, when executed, a processor (101) in a terminal apparatus (10) to execute:
generating path information that is used by a base station apparatus (20) and related to a path of the terminal apparatus, and generating error information for the path information; and
transmitting the error information to the base station apparatus.

### (Supplementary Note 48)

A program causing, when executed, a processor (101) in a terminal apparatus (10) to execute:
generating path information that is used by a base station apparatus (20) and related to a path of the terminal apparatus, and generating accuracy information for the path information; and
transmitting the accuracy information to the base station apparatus.

### (Supplementary Note 49)

A program causing, when executed, a processor (201) in a base station apparatus (20) to execute:
receiving error information for path information, the path information being information related to a path of a terminal apparatus (10); and
using the error information.

### (Supplementary Note 50)

A program causing, when executed, a processor (201) in a base station apparatus (20) to execute:
receiving accuracy information for path information, the path information being information related to a path of a terminal apparatus (10); and
using the accuracy information.

### (Supplementary Note 51)

A computer-readable non-transitory tangible storage medium storing a program causing, when executed, a processor (101) in a terminal apparatus (10) to execute:
generating path information that is used by a base station apparatus (20) and related to a path of the terminal apparatus, and generating error information for the path information; and
transmitting the error information to the base station apparatus.

### (Supplementary Note 52)

A computer-readable non-transitory tangible storage medium storing a program causing, when executed, a processor (101) in a terminal apparatus (10) to execute:
generating path information that is used by a base station apparatus (20) and related to a path of the terminal apparatus, and generating accuracy information for the path information; and
transmitting the accuracy information to the base station apparatus.

### (Supplementary Note 53)

A computer-readable non-transitory tangible storage medium storing a program causing, when executed, a processor (201) in a base station apparatus (20) to execute:
receiving error information for path information, the path information being information related to a path of a terminal apparatus (10); and
using the error information.

### (Supplementary Note 54)

A computer-readable non-transitory tangible storage medium storing a program causing, when executed, a processor (201) in a base station apparatus (20) to execute:
receiving accuracy information for path information, the path information being information related to a path of a terminal apparatus (10); and
using the accuracy information.

### (Supplementary Note 55)

A communication system comprising:
a terminal apparatus (10); and
a base station apparatus (20), wherein
the terminal apparatus is configured to:
   generate path information related to a path of the terminal apparatus, and generate error information for the path information; and
   transmit the error information to the base station apparatus, and
the base station apparatus is configured to receive the error information.

### (Supplementary Note 56)

A communication system comprising:
a terminal apparatus (10); and
a base station apparatus (20), wherein
the terminal apparatus is configured to:
   generate path information related to a path of the terminal apparatus, and generate accuracy information for the path information; and
   transmit the accuracy information to the base station apparatus, and
the base station apparatus is configured to receive the accuracy information.

## Claims

1. A terminal apparatus (10) comprising:
a controller (110) configured to generate path information that is used by a base station apparatus (20) and related to a path of the terminal apparatus, and generate error information for the path information; and
a communicator (120) configured to transmit the error information to the base station apparatus.

2. The terminal apparatus according to claim 1, wherein
the error information includes a temporal error.

3. The terminal apparatus according to claim 2, wherein
the temporal error includes an error related to a time when the terminal apparatus arrives at a predetermined point.

4. The terminal apparatus according to claim 1, wherein
the error information includes a spatial error.

5. The terminal apparatus according to claim 4, wherein
the spatial error includes an error related to a location at which the terminal apparatus moves on a planned path.

6. The terminal apparatus according to claim 1, wherein
the communicator is further configured to receive, from the base station apparatus, reference information for determining an error level for the path information.

7. The terminal apparatus according to claim 6, wherein
the controller is further configured to generate the error information, based on the reference information.

8. The terminal apparatus according to claim 1, wherein
the controller is further configured to generate the error information, based on predefined reference information for determining an error level for the path information.

9. The terminal apparatus according to claim 1, wherein
the controller is further configured to generate the error information for an entire path on which the terminal apparatus moves.

10. The terminal apparatus according to claim 1, wherein
the controller is further configured to generate the error information for each point through which the terminal apparatus paths.

11. The terminal apparatus according to claim 1, wherein
the communicator is further configured to transmit the error information as capability information of the terminal apparatus.

12. A base station apparatus (20) comprising:
a communicator (220) configured to receive error information for path information, the path information being information related to a path of a terminal apparatus (10); and
a controller (210) configured to use the error information.

13. The base station apparatus according to claim 12, wherein
the controller is further configured to generate reference information for determining an error level for the path information, and
the communicator is further configured to transmit the reference information to the terminal apparatus.

14. The base station apparatus according to claim 13, wherein
the error information is generated based on the reference information.

15. A method executed by a terminal apparatus (10), the method comprising:
generating path information that is used by a base station apparatus (20) and related to a path of the terminal apparatus, and generating error information for the path information; and
transmitting the error information to the base station apparatus.

16. A method executed by a base station apparatus (20), the method comprising:
receiving error information for path information, the path information being information related to a path of a terminal apparatus (10); and
using the error information.
